# EUROPEAN PATENT SPECIFICATION

(11) **EP 2 682 893 B1**
(45) Date of publication and mention of the grant of the patent: **31.10.2018**
(21) Application number: 12175325.5
(22) Date of filing: 06.07.2012
(51) Int. Cl.: G06K 7/08, G06K 19/06, G06K 19/12

(54) **Magnetic tag device, reader for a magnetic tag, and method of interrogating a magnetic tag**
Magnetisches Etikett, Lesegerät für magnetisches Etikett und Verfahren zum Abfragen eines magnetischen Etiketts
Dispositif d'étiquette magnétique, appareil de lecture pour étiquette magnétique et procédé d'interrogation d'une étiquette magnétique

(43) Date of publication of application: 08.01.2014
(73) Proprietor: Deutsche Telekom AG, 53113 Bonn (DE)
(72) Inventor: Roshandel, Mehran, 13591 Berlin (DE); Ketabdar, Hamed, 10119 Berlin (DE)
(74) Representative: Vossius & Partner Patentanwälte Rechtsanwälte mbB

(56) References cited:
- DE-A1- 19 620 582
- US-B1- 6 789 735

## Description

### Field of the Invention

The invention is related to a magnetic tag device, a reader for a magnetic tag, and a method of interrogating a magnetic tag.

### Background of the Invention

In prior art, "radio-frequency identification tags" (RFID tags) are known. These devices are used, for example, for identification and/or localisation of objects such as goods in a store or for automotive vehicle identification.

For example, EP 1 770 592 A2 describes a method of interrogating a package bearing an RFID tag, and multiple items inside the package each bearing its own RFID tag, the RFID tag associated with the package including information about the RFID tags associated with the multiple items, comprising the steps of: (a) interrogating the RFID tag associated with the package to identify the package and the items in the package; (b) interrogating the RFID tags associated with the items in the package substantially simultaneously to identify the items; and (c) comparing the information obtained in steps (a) and (b) to verify the contents of the package.

An RFID tag typically comprises an antenna, an analogue circuit, digital circuit, and a storage means. Further, it is distinguished between passive, active, and semi-active (or semi-passive) RFID tags. Passive RFID tags exclusively use the energy provided by the radio signal of an interrogator or reader in order to generate the responding signal as well as to supply power to the circuits; thus, they do not comprise an internal power supply. In contrast to this, both the energy for the response and the power supply of the circuits is provided by an energy source such as a small battery in active RFID tags. In semi-active responders, only the back scattering coefficients are controlled by means of the power supplied by the battery; the energy for the response is taken, however, from the radio signal of the interrogator.

In either case, it is prerequisite that an electromagnetic field is generated by the interrogator or reader. According to the requirements regarding the range of the system, this leads to correspondent energy consumption. Also, the electromagnetic field can interfere with other devices than the RFID tag. However, there may be situations where interference is undesirable, for example, when other applications can be affected and perturbed. In another scenario, it may be essential to avoid the detection of the electromagnetic field of the interrogator. Therefore, there is a need for a tag device with which the described disadvantages can be avoided and method for using it.

In US 6 789 735 B1, a device for coding and making conveyor belts is disclosed. A conveyor belt made of plastic, rubber or rubber-like material has a carrying side and a running side. A coding and marking system is completely embedded in an edge of the carrying or running side of the conveyor belt, such that the profile and function of the belt are not impaired. The coding and marking system includes a plurality of detectable material particles fixedly embedded in a matrix of plastic, rubber or a rubber-like material. The particles are completely enclosed in the matrix and disposed at predetermined locations relative to one another. A static scanner reads and detects the particles as the conveyor belt moves past the scanner.

DE 196 20 582 A1 discloses a pneumatic tyre for any type of motor vehicle or cycle, with novelty in its coded zones, which are inlaid into, or applied onto the tyre walls. These zones take the form of permanently-magnetic areas. During running, i.e. at any point after placing the tyre on any mounting and causing it to rotate, a stationary sensor detects their motion, and hence senses the rotation of the tyre. Preferably the magnetic areas form a pattern of alternating magnetic polarity around the tyre, with information content. On rotation of the tyre, the output signal from the sensor is evaluated, and can be recognised. Alternatively, the distribution of the areas is uniform over the circumference. Magnetic areas encircle the tyre continuously or as segments concentric around the axis. They are in or on the sidewalls, or in the tread. The sensor is an active transducer with elements sensing the magnetic field, based on magneto-resistance or Hall effect sensors. It is alternatively a passive inductance. In the coded zones, barium ferrite particles are embedded in the solid mass of the rubber during manufacture. Once the tyre is completed, these are magnetised. In an alternative, rubber sheet containing magnetic material is adhered to the outer wall of the tyre.

### Summary of the Invention

The object of the present invention is thus to provide a magnetic tag device, a reader for a magnetic tag, and a method of interrogating a magnetic tag. This object is achieved with the apparatus and the method according to the appended claims.

The expression "magnetic tag" (or in the following simply "tag") shall refer here to any kind of magnetic field having a structure that can be used as an identification pattern. In particular, the pattern must be suitable for being identified by a correspondingly configured reading device (which is referred to as "reader" in the following). A device configured to generate a magnetic tag is denoted "magnetic tag device" throughout the following. Further, the expression "magnetic field" in the sense of this document is used as a generic term for both the "magnetic induction" (sometimes also referred to as "magnetic field density" or "magnetic flux density", in physics literature mostly denoted by the symbol *̅B̅*̅), and the "magnetizing field" (sometimes also called "auxiliary magnetic field" or "magnetic field intensity", in the literature mostly denoted by the symbol *̅H̅*̅)*.*

One aspect of the invention relates to a magnetic tag device for generating a magnetic tag, the magnetic tag being configured for generating a magnetic tag being readable by a mobile phone, smart phone, portable computer of tablet computer, the magnetic tag device comprising one or more magnetic field sources, wherein the one or more magnetic field sources are arranged such that, upon generation of magnetic fields by the one or more magnetic field sources, their respective magnetic fields superimpose so as to form an overall magnetic field exhibiting a predefined magnetic identification pattern representing the magnetic tag.

Here, in order to allow for a general but simple formulation throughout the following, terms such as "superimposition" of magnetic fields or magnetic fields being "superimposed" denote that either the magnetic field is generated by two or more magnetic field sources or-if only one magnetic field source is involved-that the field is generated by only this single magnetic field source.

The magnetic tag device may comprise magnetisable materials, for example iron, nickel and/or cobalt, configured to manipulate the form of the overall magnetic field.

Preferably, each of the magnetic field sources of the magnetic tag according to the invention comprises at least one permanent magnet.

According to one embodiment of the magnetic tag device according to the invention, at least one of the magnetic field sources comprises at least one controllable magnet; and wherein each of the remaining magnetic field sources comprises at least one permanent magnet.

In one preferred embodiment of the invention, each of the controllable magnets comprises at least one means for moving electrical charges, preferably a conducting medium, for example a wire lead and/or an induction coil.

The magnetic tag device may comprise a control means configured for controlling the controllable magnets, for example a microcontroller or a computer. The control means may be configured to control the controllable magnets such that a variety of different magnetic tags can be generated. The control means may be configured to control the controllable magnets such that a magnetic tag exhibits a predefined pattern along the time-axis.

According to a preferred embodiment of the invention, the magnetic field sources are bar magnets. The bar magnets can be, for example, permanent bar magnets or electromagnets having a coil wound along straight line.

In one embodiment of the invention, the magnetic field sources are arranged on the angles of a virtual regular polygon.

Preferably, the magnetic field sources are arranged such that the magnetic moment of each of the magnetic field sources is oriented
a) towards the center point of the virtual regular polygon or
b) away from the center point of the virtual regular polygon.

One embodiment of the invention relates to a magnetic tag device, wherein the virtual regular polygon has an odd number of angles and the orientation of the magnetic moments of any two neighbored magnetic field sources is alternating towards and away from the center point of the virtual regular polygon.

Here, the term "two neighboured magnetic field sources" shall denote that the two magnetic field sources-or more precisely: the centre of gravity or the geometric centre of each of the magnetic field sources-are positioned on neighboured angles of the virtual regular polygon.

According to a preferred embodiment of the magnetic tag device of the invention, the magnetic field sources are arranged such that with respect to one of the magnetic field source, each of the other magnetic field sources is oriented either parallel or antiparallel.

The magnetic field sources may be arranged such that the orientation of the magnetic moments of all magnetic field sources is parallel.

In an alternative embodiment of the magnetic tag device, the virtual regular polygon has an odd number of angles and the orientation of the magnetic moments of any two neighbored magnetic field sources is antiparallel.

In one preferred embodiment of the invention, the magnetic field sources are arranged as a planar matrix, for example at the grid points of a virtual regular matrix, and wherein preferably the magnetic moments of the magnetic field sources are all oriented in parallel or antiparallel.

A "matrix" shall refer here to a set of positions within a rectangular arrangement having a width in a horizontal direction and a height in a vertical direction, the arrangement being subdivided into a number of sections along both the horizontal and the vertical direction, and wherein said set of positions comprises all intersection points of the edges of the sections along the horizontal direction with the edges of the sections along the vertical direction. Moreover, a "regular matrix" refers to a matrix in the above sense, wherein the arrangement is subdivided into a number of equally sized sections along both the horizontal and the vertical direction.

Another aspect of the invention relates to a reader for a magnetic tag generated by a magnetic tag device according to the invention, wherein the reader comprises at least one magnetic sensor, preferably two magnetic sensors, configured to measure an overall magnetic field generated by the magnetic tag device and wherein the reader is a mobile phone or a smart phone or a portable computer or a tablet computer.

The at least one magnetic sensor may comprise a magnetic needle and/or a hall effect sensor.

One preferred embodiment of the invention relates to a reader, wherein the reader comprises an evaluation unit, for example a microcontroller or a microchip, configured:
a) to generate a numeric representation of the measured magnetic field; and
b) to compare the numeric representation of the measured magnetic field with numerical representations of a number of predefined patterns of magnetic fields.

A numerical representation of a magnetic field can be, e.g., a sample, wherein for each of a number of points sampling the 3-dimensional space around the magnetic tag (defined, e.g., by a virtual box or a virtual sphere around the magnetic tag), a magnetic field vector (or a component or the norm thereof) is assigned. However, it might be sufficient that for each of a number of points sampling a 2-dimensional space in the vicinity of the magnetic tag, a magnetic field vector (or a component or the norm thereof) is assigned. Then, two numerical representations of a magnetic field can be easily compared by comparing the magnetic field vector (or a component or the norm thereof) for each of the sample points. Therein, interpolation methods and/or affine transformations can also be employed. This way, a numerical representation of a measured magnetic field can be easily compared to a predefined numerical representation that is preferably stored in the reader. In particular, the tolerance of the reader can be adjusted by choosing a maximum value up to which the deviation between (the considered components of) two vectors or the norm of two vectors to be compared are allowed to deviate.

As usually only a restricted number of magnetic sensors will be used in the reader, for example one or two sensors, a sample is generated by moving the reader-and thereby the sensor(s)-through the magnetic field, so that measurements of the field can be taken at different positions.

A further aspect of the invention relates to a method of interrogating a magnetic tag generated by a magnetic tag device according to the invention, with the steps:
a) measuring the magnetic tag by a mobile phone, a smart phone, a portable computer or a tablet computer;
b) generating a numeric representation of the magnetic tag measured in step a);
c) comparing the numeric representation of the magnetic tag generated in step b) with numerical representations of a number of predefined patterns of magnetic fields.

Step a) of measuring a magnetic tag may comprise moving a magnetic sensor, for example a magnetic needle or a hall effect sensor, within the magnetic field representing the magnetic tag.

Alternatively, step a) of measuring a magnetic tag comprises measuring the magnetic field at a plurality of positions at time by means of two, or three, or more magnetic sensors, for example magnetic needles and/or a hall effect sensors.

Preferably, steps a) to c) are performed by means of the reader according to the invention as described above.

A magnetic tag device according to the invention can be used to control a device in the vicinity of the tag. For example, the tag can be hiddenly arranged on, at, or under a desk or table. Further, a mobile phone or smartphone can be configured as a reader. Then, a certain action can be activated when the phone is brought in the vicinity of the magnetic tag. For example, during a meeting the phone can be laid onto the table within the tag's area of influence in order to switch off loud ringing in case of a phone call. Another possible action is making an emergency call without attracting attention, for example at a cashier's desk in a bank.

If the magnetic tag device itself is externally controllable-for example, if the device comprises at least one electromagnet-actions of the phone can also be externally triggered. In particular, this allows for transmission of information via the tag. For example, when the tag is connected with a "smart" refrigerator being able to count its contents, this information can be processed and be represented by a controllable tag. In other words, the tag generated by the tag device is dependent on the "state" of the contents in the refrigerator. The tag can then be read by the reader that again might be integrated in a mobile phone or smartphone. Eventually, a purchase list can automatically be created by the information represented by the tag.

When using controllable magnets within the magnetic tag device-i.e. magnets with the magnetic field of which being (externally) controllable, for example, an electromagnet-it is also possible to increase the complexity of the magnetic tag by enhancing it by the time-axis. In other words, the pattern of the magnetic field constituting the tag is varied with the time.

Of course, the skilled person can think of a wide variety of further actions that are rendered possible with the magnetic tag according to the invention and, preferably, a reader therefor. Other aspects, features, and advantages will be apparent from the summary above, as well as from the description that follows, including the figures and the claims. A magnetic tag device, a reader configured for reading a magnetic tag and a method for interrogating a magnetic tag according to the present invention are respectively defined in claims 1, 17 and 20. Preferred embodiments are defined in dependent claims 2-16, 18, 19, 21-23.

### List of figures:

Fig. 1: An embodiment of the magnetic tag device according to the invention.
Fig. 2: Another embodiment of the magnetic tag device according to the invention.
Fig. 3: Still another embodiment of the magnetic tag device according to the invention.

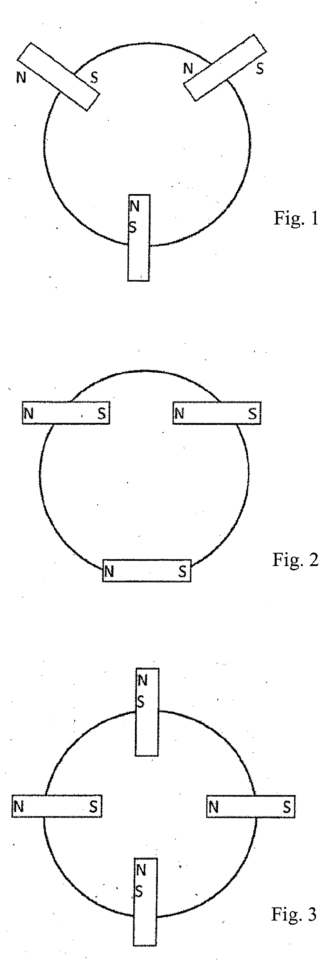

Figs. 1 and 2 show embodiments of the magnetic tag device according to the invention, wherein three bar magnets are arranged on a (virtual) circle, each of the magnets thereby having the same distance to both of its neighboured magnets. In other words, the magnets - or more precisely: the geometric centers of which - are arranged on the angles of an equilateral triangle. The bar magnets are preferably permanent magnets or electromagnets.

In Fig. 1, the three bar magnets are arranged the following way: the magnetic moment of two of the magnets is oriented such that the north pole is directed towards the centre of the circle, the magnetic moment of the remaining third magnet, however, is oriented such that the south pole is directed towards the centre of the circle. Of course, other similar embodiments can be easily derived by modifying the embodiment of Fig. 1 in that the orientation of all magnets is chosen such that the north pole (or the south pole) is directed towards the centre of the circle.

In Fig. 2, however, the bar magnets are arranged such that all of the respective magnetic moments are oriented in parallel to each other. A similar embodiment can be derived from this embodiment by altering it such that the orientation of one of the three bar magnet is inverted.

Fig. 3 shows an embodiment of the magnetic tag device according to the invention, wherein four bar magnets are arranged on a (virtual) circle, each of the magnets thereby having the same distance to both of its (on the line of the circle directly) neighboured magnets. In other words, the magnets-or more precisely: the geometric centers of which-are arranged on the angles of square. The bar magnets are preferably permanent magnets or electromagnets. Moreover, two neighboured magnets are oriented such that the north pole is directed towards the centre of the circle, the remaining two magnets are oriented such that the south pole is directed towards the centre of the circle.

Modifications from Fig. 3 can be easily derived: For example, in a further embodiment, the north pole of all of the four magnets is directed towards the centre of the circle. In another alteration, the south pole of all of the four magnets is directed towards the centre of the circle. In yet another embodiment, the magnetic moment of any two neighboured are alternating. In the latter case, the north pole of two of the magnets is directed towards the centre of the circle, and the south pole of the other two magnets is directed towards the centre of the circle.

While the invention has been illustrated and described in detail in the drawings and foregoing description, such illustration and description are to be considered illustrative or exemplary and not restrictive. It will be understood that changes and modifications may be made by those of ordinary skill within the scope of the following claims. In particular, the present invention covers further embodiments with any combination of features from different embodiments described above and below.

Furthermore, in the claims the word "comprising" does not exclude other elements or steps, and the indefinite article "a" or "an" does not exclude a plurality. A single unit may fulfil the functions of several features recited in the claims. The terms "essentially", "about", "approximately" and the like in connection with an attribute or a value particularly also define exactly the attribute or exactly the value, respectively.

## Claims

1. A magnetic tag device for generating a magnetic tag,
**characterised in that** the magnetic tag device is configured for generating a magnetic tag being readable by a mobile phone, smart phone, portable computer, or tablet computer,
the magnetic tag device comprising one or more magnetic field sources, wherein the one or more magnetic field sources are arranged such that, upon generation of magnetic fields by the one or more magnetic field sources, their respective magnetic fields superimpose so as to form an overall magnetic field exhibiting a predefined magnetic identification pattern representing the magnetic tag.

2. The magnetic tag device according to claim 1, further comprising magnetisable materials, for example iron, nickel and/or cobalt, configured to manipulate the form of the overall magnetic field.

3. The magnetic tag device according to claim 1 or 2, wherein each of the magnetic field sources comprises at least one permanent magnet.

4. The magnetic tag device according to any one of claims 1 to 3,
wherein at least one of the magnetic field sources comprises at least one controllable magnet; and
wherein each of the remaining magnetic field sources comprises at least one permanent magnet.

5. The magnetic tag device according to claim 4, wherein each of the controllable magnets comprises at least one means for moving electrical charges, preferably a conducting medium, for example a wire lead and/or an induction coil.

6. The magnetic tag device according to claim 4 or 5, further comprising a control means configured for controlling the controllable magnets, for example a microcontroller or a computer.

7. The magnetic tag device according to claim 6, wherein the control means is configured to control the controllable magnets such that a variety of different magnetic tags can be generated.

8. The magnetic tag device according to claim 6 or 7, wherein the control means is configured to control the controllable magnets such that a magnetic tag exhibits a predefined pattern along the time-axis.

9. The magnetic tag device according to any one of claims 1 to 8, wherein the magnetic field sources are bar magnets.

10. The magnetic tag device according to any one of claims 1 to 9, wherein the magnetic field sources are arranged on the angles of a virtual regular polygon.

11. The magnetic tag device according to claim 10, wherein the magnetic field sources are arranged such that the magnetic moment of each of the magnetic field sources is oriented
a) towards the center point of the virtual regular polygon or
b) away from the center point of the virtual regular polygon.

12. The magnetic tag device according to claim 11, wherein the virtual regular polygon has an odd number of angles and the orientation of the magnetic moments of any two neighbored magnetic field sources is alternating towards and away from the center point of the virtual regular polygon.

13. The magnetic tag device according to claim 10, wherein the magnetic field sources are arranged such that with respect to one of the magnetic field source, each of the other magnetic field sources is oriented either parallel or antiparallel.

14. The magnetic tag device according to claim 13, wherein the magnetic field sources are arranged such that the orientation of the magnetic moments of all magnetic field sources is parallel.

15. The magnetic tag device according to claim 13, wherein the virtual regular polygon has an odd number of angles and the orientation of the magnetic moments of any two neighbored magnetic field sources is antiparallel.

16. The magnetic tag device according to any one of claims 1 to 9, wherein the magnetic field sources are arranged as a planar matrix, for example at the grid points of a virtual regular matrix, and wherein preferably the magnetic moments of the magnetic field sources are all oriented in parallel or antiparallel.

17. A reader configured for reading a magnetic tag generated by a magnetic tag device according to any one of claims 1 to 16, wherein the reader comprises at least one magnetic sensor, preferably two magnetic sensors, configured to measure an overall magnetic field generated by the magnetic tag device, and wherein the reader is a mobile phone or a smart phone or a portable computer or a tablet computer,

18. The reader according to claim 17, wherein the at least one magnetic sensor comprises a magnetic needle and/or a hall effect sensor.

19. The reader according to claim 17 or 18, wherein the reader comprises an evaluation unit, for example a microcontroller or a microchip, configured:
a) to generate a numeric representation of the measured magnetic field; and
b) to compare the numeric representation of the measured magnetic field with numerical representations of a number of predefined patterns of magnetic fields.

20. A method of interrogating a magnetic tag generated by a magnetic tag device according to any one of claims 1 to 16, with the steps:
a) measuring the magnetic tag by a mobile phone, a smart phone, a portable computer, or a tablet computer;
b) generating a numeric representation of the magnetic tag measured in step a);
c) comparing the numeric representation of the magnetic tag generated in step b) with numerical representations of a number of predefined patterns of magnetic fields.

21. The method according to claim 20, wherein the step a) of measuring the magnetic tag comprises moving a magnetic sensor, for example a magnetic needle or a hall effect sensor, within the magnetic field representing the magnetic tag.

22. The method according to claim 20, wherein the step a) of measuring the magnetic tag comprises measuring the magnetic field at a plurality of positions at time by means of two, or three, or more magnetic sensors, for example magnetic needles and/or a hall effect sensors.

23. The method according to any one of claim 20 to 22, wherein the steps a) to c) are performed by means of the reader according to any one of claims 17 to 20.

## Patentansprüche

1. Magnetische Etikettvorrichtung zur Erzeugung eines magnetischen Etiketts,
**dadurch gekennzeichnet, dass** die magnetische Etikettvorrichtung zur Erzeugung eines magnetischen Etiketts konfiguriert ist, das durch ein Mobiltelefon, ein Smartphone, einen tragbaren Computer oder einen Tablet-Computer lesbar ist,
wobei die magnetische Etikettvorrichtung eine oder mehrere Magnetfeldquellen aufweist, wobei die eine oder die mehreren Magnetfeldquellen so angeordnet sind, dass bei der Erzeugung von Magnetfeldern durch die eine oder die mehreren Magnetfeldquellen sich ihre jeweiligen Magnetfelder überlagern, um ein Gesamtmagnetfeld zu bilden, das ein vordefiniertes magnetisches Identifikationsmuster aufweist, das das magnetische Etikett repräsentiert.

2. Magnetische Etikettvorrichtung nach Anspruch 1, das ferner magnetisierbare Materialien, zum Beispiel Eisen, Nickel und/oder Kobalt aufweist, die konfiguriert sind, die Form des Gesamtmagnetfelds zu beeinflussen.

3. Magnetische Etikettvorrichtung nach Anspruch 1 oder 2, wobei jede der Magnetfeldquellen mindestens einen Permanentmagnet aufweist.

4. Magnetische Etikettvorrichtung nach einem der Ansprüche 1 bis 3,
wobei mindestens eine der Magnetfeldquellen mindestens einen steuerbaren Magnet aufweist; und
wobei jede der restlichen Magnetfeldquellen mindestens einen Permanentmagnet aufweist.

5. Magnetische Etikettvorrichtung nach Anspruch 4, wobei jeder der steuerbaren Magnete mindestens ein Mittel zum Bewegen von elektrischen Ladungen, vorzugsweise ein leitfähiges Medium, zum Beispiel einen Leitungsdraht und/oder eine Induktionsspule aufweist.

6. Magnetische Etikettvorrichtung nach Anspruch 4 oder 5, die ferner ein Steuermittel, das zum Steuern der steuerbaren Magnete konfiguriert ist, zum Beispiel einen Mikrokontroller oder einen Computer aufweist.

7. Magnetische Etikettvorrichtung nach Anspruch 6, wobei das Steuermittel konfiguriert ist, die steuerbaren Magnete so zu steuern, dass eine Vielfalt von unterschiedlichen magnetischen Etiketten erzeugt werden können.

8. Magnetische Etikettvorrichtung nach Anspruch 6 oder 7, wobei das Steuermittel konfiguriert ist, die steuerbaren Magnete so zu steuern, dass ein magnetisches Etikett längs der Zeitachse ein vordefiniertes Muster aufweist.

9. Magnetische Etikettvorrichtung nach einem der Ansprüche 1 bis 8, wobei die Magnetfeldquellen Stabmagnete sind.

10. Magnetische Etikettvorrichtung nach einem der Ansprüche 1 bis 9, wobei die Magnetfeldquellen in Winkeln eines virtuellen regelmäßigen Vielecks angeordnet sind.

11. Magnetische Etikettvorrichtung nach Anspruch 10, wobei die Magnetfeldquellen so angeordnet sind, dass das magnetische Moment von jeder der Magnetfeldquellen ausgerichtet ist
a) zum Mittelpunkt des virtuellen regelmäßigen Vielecks oder
b) vom Mittelpunkt des virtuellen regelmäßigen Vielecks weg.

12. Magnetische Etikettvorrichtung nach Anspruch 11, wobei das virtuelle regelmäßige Vieleck eine ungerade Anzahl von Winkeln aufweist und die Ausrichtung der magnetischen Momente von irgendwelchen zwei benachbarten Magnetfeldquellen abwechselnd zum Mittelpunkt des virtuellen regelmäßigen Vielecks hin und von ihm weg gestaltet ist.

13. Magnetische Etikettvorrichtung nach Anspruch 10, wobei die Magnetfeldquellen so angeordnet sind, dass bezüglich einer der Magnetfeldquellen jede andere Magnetfeldquelle entweder parallel oder antiparallel ausgerichtet ist.

14. Magnetische Etikettvorrichtung nach Anspruch 13, wobei die Magnetfeldquellen so angeordnet sind, dass die Ausrichtung der magnetischen Momente aller Magnetfeldquellen parallel ist.

15. Magnetische Etikettvorrichtung nach Anspruch 13, wobei das virtuelle regelmäßige Vieleck eine ungerade Anzahl von Winkeln aufweist und die Ausrichtung der magnetischen Momente von irgendwelchen zwei benachbarten Magnetfeldquellen antiparallel ist.

16. Magnetische Etikettvorrichtung nach einem der Ansprüche 1 bis 9, wobei die Magnetfeldquellen als eine ebene Matrix, zum Beispiel an den Gitterpunkten einer virtuellen regelmäßigen Matrix angeordnet sind, und wobei vorzugsweise die magnetischen Momente der Magnetfeldquellen alle parallel oder antiparallel ausgerichtet sind.

17. Lesegerät, das zum Lesen eines magnetischen Etiketts konfiguriert ist, das durch eine magnetische Etikettvorrichtung nach einem der Ansprüche 1 bis 16 erzeugt wird, wobei das Lesegerät mindestens einen Magnetsensor, vorzugsweise zwei Magnetsensoren aufweist, die konfiguriert sind, ein durch die magnetische Etikettvorrichtung erzeugtes Gesamtmagnetfeld zu messen, und wobei das Lesegerät ein Mobiltelefon oder ein Smartphone oder ein tragbarer Computer oder ein Tablet-Computer ist.

18. Lesegerät nach Anspruch 17, wobei der mindestens eine Magnetsensor eine Magnetnadel und/oder einen Halleffektsensor aufweist.

19. Lesegerät nach Anspruch 17 oder 18, wobei das Lesegerät eine Auswertungseinheit, zum Beispiel einen Mikrokontroller oder einen Mikrochip aufweist, der konfiguriert ist:
a) eine numerische Darstellung des gemessenen Magnetfelds zu erzeugen; und
b) die numerische Darstellung des gemessenen Magnetfelds mit numerischen Darstellungen einer Anzahl von vordefinierten Mustern von Magnetfeldern zu vergleichen.

20. Verfahren zum Abfragen eines magnetischen Etiketts, das durch eine magnetische Etikettvorrichtung nach einem der Ansprüche 1 bis 16 erzeugt wird, mit den Schritten:
a) Messen des magnetischen Etiketts durch ein Mobiltelefon, ein Smartphone, einen tragbaren Computer oder einen Tablet-Computer;
b) Erzeugen einer numerischen Darstellung des in Schritt a) gemessenen magnetischen Etiketts;
c) Vergleichen der numerischen Darstellung des in Schritt b) erzeugten magnetisches Etiketts mit numerischen Darstellungen einer Anzahl von vordefinierten Mustern von Magnetfeldern.

21. Verfahren nach Anspruch 20, wobei der Schritt a) zum Messen des magnetischen Etiketts das Bewegen eines Magnetsensors, zum Beispiel einer Magnetnadel und/oder eines Halleffektsensors innerhalb des Magnetfelds aufweist, das durch das magnetische Etikett repräsentiert wird.

22. Verfahren nach Anspruch 20, wobei der Schritt a) zum Messen des magnetischen Etiketts das gleichzeige Messen des Magnetfelds an einer Vielzahl von Positionen mittels zwei oder drei oder mehr Magnetsensoren, zum Beispiel Magnetnadeln und/oder Halleffektsensoren aufweist.

23. Verfahren nach einem der Ansprüche 20 bis 22, wobei die Schritte a) bis c) mittels des Lesegeräts nach einem der Ansprüche 17 bis 20 durchgeführt werden.

## Revendications

1. Dispositif d'étiquette magnétique pour la génération d'une étiquette magnétique, **caractérisé en ce que** ledit dispositif d'étiquette magnétique est prévu pour générer une étiquette magnétique lisible par un téléphone mobile, un smartphone, un ordinateur portable ou une tablette,
ledit dispositif d'étiquette magnétique comprenant une ou plusieurs sources de champ magnétique, où
la ou les sources de champ magnétique sont disposées de telle manière que, par génération de champs magnétiques par la ou les sources de champ magnétique, les champs magnétiques respectifs se superposent de manière à former un champ magnétique global ayant un motif d'identification magnétique prédéfini représentant l'étiquette magnétique.

2. Dispositif d'étiquette magnétique selon la revendication 1, comprenant en outre des matériaux magnétisables, tels que le fer, le nickel et/ou le cobalt, prévus pour influencer la forme du champ magnétique global.

3. Dispositif d'étiquette magnétique selon la revendication 1 ou la revendication 2, où chaque source de champ magnétique comprend au moins un aimant permanent.

4. Dispositif d'étiquette magnétique selon l'une des revendications 1 à 3,
où au moins une des sources de champ magnétique comprend au moins un aimant commandable ; et
où chacune des sources de champ magnétique restantes comprend au moins un aimant permanent.

5. Dispositif d'étiquette magnétique selon la revendication 4, où chaque aimant commandable comprend au moins un moyen de déplacement de charges électriques, préférentiellement un moyen conducteur, tel qu'un fil conducteur et/ou une bobine d'induction.

6. Dispositif d'étiquette magnétique selon la revendication 4 ou la revendication 5, comprenant en outre un moyen de commande prévu pour commande les aimants commandables, tel qu'un microcontrôleur ou un ordinateur.

7. Dispositif d'étiquette magnétique selon la revendication 6, où le moyen de commande est prévu pour commander les aimants commandables de manière à pouvoir générer une pluralité d'étiquettes magnétiques différentes.

8. Dispositif d'étiquette magnétique selon la revendication 6 ou la revendication 7, où le moyen de commande est prévu pour commander les aimants commandables de telle manière qu'une étiquette magnétique présente un motif prédéfini sur l'axe temporel.

9. Dispositif d'étiquette magnétique selon l'une des revendications 1 à 8, où les sources de champ magnétique sont des aimants droits.

10. Dispositif d'étiquette magnétique selon l'une des revendications 1 à 9, où les sources de champ magnétique sont disposées dans les angles d'un polygone régulier virtuel.

11. Dispositif d'étiquette magnétique selon la revendication 10, où les sources de champ magnétique sont disposées de telle manière que le moment magnétique de chacune des sources de champ magnétique est orienté
a) vers le centre du polygone régulier virtuel, ou
b) en opposition au centre du polygone régulier virtuel.

12. Dispositif d'étiquette magnétique selon la revendication 11, où le polygone régulier virtuel a un nombre d'angles impair et les orientations des moments magnétiques de deux sources de champ magnétique contiguës quelconques sont alternées vers le centre du polygone régulier virtuel et en opposition à celui-ci.

13. Dispositif d'étiquette magnétique selon la revendication 10, où les sources de champ magnétique sont disposées de telle manière que par rapport à une source de champ magnétique, chacune des autres sources de champ magnétique est orientée de manière parallèle ou antiparallèle.

14. Dispositif d'étiquette magnétique selon la revendication 13, où les sources de champ magnétique sont disposées de telle manière que les orientations des moments magnétiques de toutes les sources de champ magnétique sont parallèles.

15. Dispositif d'étiquette magnétique selon la revendication 13, où le polygone régulier virtuel a un nombre d'angles impair et les orientations des moments magnétiques de deux sources de champ magnétique contiguës quelconques sont antiparallèles.

16. Dispositif d'étiquette magnétique selon l'une des revendications 1 à 9, où les sources de champ magnétique sont agencées comme matrice plane, par exemple sur les points de grille d'une matrice régulière virtuelle, et où les moments magnétiques des sources de champ magnétique sont préférentiellement tous orientés de manière parallèle ou antiparallèle.

17. Lecteur prévu pour lire une étiquette magnétique générée par un dispositif d'étiquette magnétique selon l'une des revendications 1 à 16, ledit lecteur comprenant au moins un capteur magnétique, préférentiellement deux capteurs magnétiques, prévus pour mesurer un champ magnétique global généré par le dispositif d'étiquette magnétique, et ledit lecteur étant un téléphone mobile ou un smartphone ou un ordinateur portable ou une tablette.

18. Lecteur selon la revendication 17, où ledit au moins un capteur magnétique comprend une aiguille magnétique et/ou un capteur à effet Hall.

19. Lecteur selon la revendication 17 ou la revendication 18, ledit lecteur comprenant une unité d'évaluation, telle qu'un microcontrôleur ou une micropuce, prévue :
a) pour générer une représentation numérique du champ magnétique mesuré ; et
b) pour comparer la représentation numérique du champ magnétique mesuré avec des représentations numériques d'une pluralité de motifs prédéfinis de champs magnétiques.

20. Procédé d'interrogation d'une étiquette magnétique générée par un dispositif d'étiquette magnétique selon l'une des revendications 1 à 16, comprenant les étapes suivantes :
a) mesure de l'étiquette magnétique par un téléphone mobile, un smartphone, un ordinateur portable ou une tablette ;
b) génération d'une représentation numérique de l'étiquette magnétique mesurée lors de l'étape a) ;
c) comparaison de la représentation numérique de l'étiquette magnétique générée lors de l'étape b) avec les représentations numériques d'une pluralité de motifs prédéfinis de champs magnétiques.

21. Procédé selon la revendication 20, où l'étape a) de mesure de l'étiquette magnétique comprend le déplacement d'un capteur magnétique, tel qu'une aiguille magnétique et/ou un capteur à effet Hall, à l'intérieur du champ magnétique représentant l'étiquette magnétique.

22. Procédé selon la revendication 20, où l'étape a) de mesure de l'étiquette magnétique comprend la mesure simultanée du champ magnétique à une pluralité d'emplacements au moyen de deux, de trois ou de plusieurs capteurs magnétiques, tels que des aiguilles magnétiques et/ou des capteurs à effet Hall.

23. Procédé selon l'une des revendications 20 à 22, où les étapes a) à c) sont exécutées au moyen du lecteur selon l'une des revendications 17 à 20.
